# EUROPEAN PATENT APPLICATION

(11) **EP 3 666 874 A1**
(43) Date of publication of application: **17.06.2020**
(21) Application number: 19215074.6
(22) Date of filing: 11.12.2019
(51) Int. Cl.: C12C 13/10, B67D 1/04, B67D 1/08, B67D 1/12, C12C 11/00

(54) **BEVERAGE MAKER**

(30) Priority: 12.12.2018 KR 20180159775
(71) Applicant: LG Electronics Inc., SEOUL, 07336 (KR)
(72) Inventor: Kim, Youngjoon, 08592 Seoul (KR); Hong, Jinpyo, 08592 Seoul (KR); Lee, Daewoong, 08592 Seoul (KR)
(74) Representative: Ter Meer Steinmeister & Partner

(57) **Abstract**

A beverage maker that controls a primary fermentation operation and a secondary fermentation operation based on recipe information of a beverage to be made. In the primary fermentation operation, the beverage maker controls a gas discharge valve to open a gas discharge channel for a first open time based on the recipe information, controls the gas discharge valve to close the gas discharge channel for a close time based on the recipe information after the first open time has elapsed, senses a variation in an inner pressure of a fermentation tank using the gas pressure sensor for the close time, and determine whether the primary fermentation operation is completed, based on the sensed variation.

## Description

### BACKGROUND

### Field

A beverage maker, and more particularly a beverage maker capable of making a beverage under optimal control based on recipe information are disclosed herein.

### Background

Beverages are collectively referred to as drinkable liquids, such as alcohol or tea. For example, beverages may be divided into various categories, such as water (a beverage) for quenching thirst, juice beverages with a unique flavor and taste, refreshing beverages giving a refreshing sensation, favorite beverages with a stimulant effect, or alcoholic beverages with an alcohol effect.

A representative example of such a beverage is beer. Beer is an alcoholic beverage produced by making juice of malt, which is made by sprouting barley, filtering the juice, adding hop, and fermenting yeast.

Consumers may purchase ready-made products made and sold by a beer maker or may make beer at home (hereinafter "homemade" beer) produced by directly fermenting beer ingredients at home or in a bar. Homemade beer may be made in a variety of types rather than ready-made products and may be made to better suit a consumer's taste.

The ingredients for making beer may include water, liquid malt, hop, yeast, and a flavoring additive, for example. Leaven, which is called yeast, may be added to liquid malt to ferment the liquid malt and assist production of alcohol and carbonic acid. Flavor additives are additives that enhance the taste of beer, such as fruit, syrup, and vanilla beans, for example.

Generally, homemade beer may include three stages or operations, namely, a wort stage or operation, a fermentation stage or operation, and an aging stage of operation, and it may take about two to three weeks from the wort stage or operation to the aging stage or operation. Maintaining an optimum temperature during the fermentation operation is important for homemade beer, and the easier the beer is to make, the more user convenience is improved. Recently, a beverage maker capable of easily making a beer-like beverage at home or in a bar has been gradually used, and such a beverage maker is configured to be convenient.

### SUMMARY

One or more of the above objectives or another objective is achieved by the subject-matter of independent claim(s).

In the present technique a beverage maker is provided. The beverage maker may include a fermentation tank having a space to make a beverage, and a gas discharge channel that communicates with an inner portion of the fermentation tank. The beverage maker may include one or more or all of: a gas discharge valve disposed on the gas discharge channel; a gas pressure sensor that may be disposed in the gas discharge channel to sense an inner pressure of the fermentation tank; and a controller configured to perform a primary fermentation operation and a secondary fermentation operation based on recipe information of the beverage to be made.

The controller may be configured to: in the primary fermentation operation, control the gas discharge valve to open the gas discharge channel for a first open time, i.e. first open time duration, based on the recipe information; control the gas discharge valve to close the gas discharge channel for a close time based on the recipe information after the first open time has elapsed; sense a variation in the inner pressure of the fermentation tank using the gas pressure sensor for the close time; and determine whether the primary fermentation operation is completed, based on the sensed variation.

The controller may be configured to: control the gas discharge valve to open the gas discharge channel for a second open time based on the recipe information when the variation is greater than a primary fermentation reference pressure variation based on the recipe information.

The controller may be configured to: control the gas discharge valve to close the gas discharge channel for the close time based on the recipe information after the second open time has elapsed; sense the variation in the inner pressure of the fermentation tank using the gas pressure sensor for the close time; and determine whether the primary fermentation operation is completed, based on the sensed variation.

The controller may be configured to: end the primary fermentation operation, when the variation is equal to or less than the primary fermentation reference pressure variation.

The controller may be configured to: in the secondary fermentation operation, control the gas discharge channel to be open or closed based on a secondary fermentation pressure range based on the recipe information.

The controller may be configured to: in the secondary fermentation operation, control the gas discharge valve to open the gas discharge channel, when the pressure sensed by the gas pressure sensor exceeds an upper limit of the secondary fermentation pressure range.

The controller may be configured to: in the secondary fermentation operation, control the gas discharge valve to close the gas discharge channel when a specific time has elapsed after the gas discharge channel is open.

The controller may be configured to: complete the secondary fermentation operation when a time in which the secondary fermentation operation is performed reaches a predetermined secondary fermentation time based on the recipe information.

The beverage maker may include an evaporator wound around a portion of an outer surface of the fermentation tank.

The beverage maker may include a compressor to supply a refrigerant to the evaporator.

The controller may be configured to: control a fermentation tank cooling operation performed before the primary fermentation operation.

The controller may be configured to: cool the fermentation tank by driving the compressor in the fermentation tank cooling operation.

The controller may be configured to: sense a temperature of the fermentation tank through a temperature sensor provided at, preferable in, the fermentation tank.

The controller may be configured to: end the fermentation tank cooling operation when the sensed temperature reaches a cooling temperature based on the recipe information.

The beverage maker may include a heater. The heater may be provided under the fermentation tank.

The controller may be configured to: sense the temperature of the fermentation tank during the primary fermentation operation and/or the secondary fermentation operation, drive the compressor when the sensed temperature is higher than a target fermentation temperature based on the recipe information by a specific value, and/or drive the heater when the sensed temperature is lower than the target fermentation temperature by a specific value.

The first open time and the close time may be set to be shorter as a fermentation speed of the beverage made based on the recipe information is increased.

The beverage maker may include a memory configured to store a first open time and/or a close time corresponding to each of multiple pieces of recipe information.

The beverage maker may include at least one of: an input interface which may include at least one of a rotary knob and/or a touch pad configured to receive an input of the recipe information; a communication interface configured to receive the recipe information from a terminal; a near field communication (NFC) module configured to receive the recipe information from an NFC tag provided in a beverage preparation pack or a beverage preparation kit; or a code recognizer configured to recognize a code provided in the beverage preparation pack or the beverage preparation kit.

The beverage maker may include a display configured to display the received recipe information.

### BRIEF DESCRIPTION OF THE DRAWINGS

The present technique will be described in detail with reference to the following drawings in which like reference numerals refer to like elements, and wherein:
FIG. 1 is a schematic view of a beverage maker according to an exemplary embodiment of the present technique;
FIG. 2 is a flowchart of a method for controlling a beverage maker according to an exemplary embodiment of the present technique;
FIG. 3 is a schematic block diagram for controlling a beverage maker according to an exemplary embodiment of the present technique;
FIG. 4 is a flowchart of a control operation of a beverage maker according to an exemplary embodiment of the present technique;
FIG. 5 is a table illustrating control values set to mutually different values depending on recipe information of beer when a type of a beverage made by the beverage maker is beer; and
FIGs. 6 to 9 are views illustrating a beverage making operation performed based on control values set according to recipe information.

### DETAILED DESCRIPTION

Hereinafter, the present technique is described with reference to drawings. Wherever possible, like or the same reference numerals have been used to indicate like or the same elements, and repetitive disclosure has been omitted.

Although beer is exemplified as a beverage that is made using a beverage maker according to the present technique, the kind of beverage that can be made using the beverage maker is not limited to beer and various kinds of beverages may be made using the beverage maker according to the present technique.

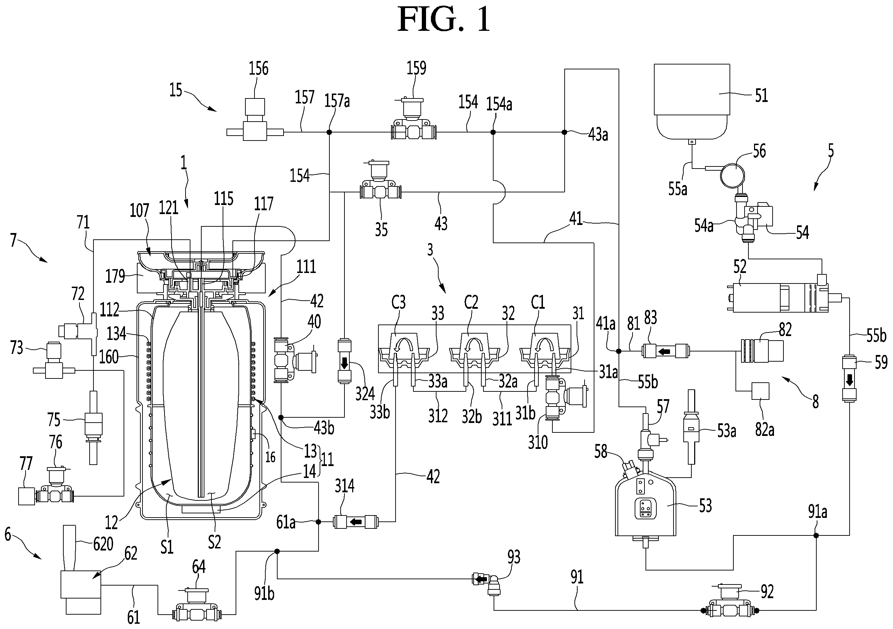

FIG. 1 is a schematic view of a beverage maker according to the present technique. The beverage maker may include a fermentation module 1. A beverage may be fermented in the fermentation module 1. The beverage maker may include a temperature controller that controls an inner temperature of the fermentation module 1.

The beverage maker may include a fluid supply module 5. The fluid supply module 5 may supply a fluid, such as water.

The beverage maker may include an ingredient supplier 3 provided with ingredient receivers 31, 32, and 33 in which ingredients required for making a beverage may be accommodated. The beverage maker may include main channels 41 and 42 that connect the fluid supply module 5 to the fermentation module 1.

The beverage maker may include a beverage dispenser 6 that dispenses the beverage made in the fermentation module 1 to the outside. The beverage dispenser 6 may be connected to second main channel 42. Thus, the beverage dispensed from the fermentation module 1 may be guided to the beverage dispenser 6 by passing through a portion of the second main channel 42.

The beverage maker may include a gas discharger 7. The gas discharger 7 may be connected to the fermentation module 1 to discharge a gas generated while the beverage is made.

The beverage maker may include an air injector 8 that injects air. The air injector 8 may be connected to the fluid supply module 5 or first main channel 41. The air injector 8 may include an air pump 82.

The beverage maker may include an air controller 15 that controls a pressure between an inner wall of a fermentation tank 112 and an outer surface of a fermentation container 12, which may be positioned inside the fermentation tank 112. The beverage maker may include a sub channel 91. The sub channel 91 may connect the fluid supply module 5 to the beverage dispenser 6.

The fermentation module 1 may include a fermentation tank module 111 having an opening, and a fermentation lid 107 that opens and closes the opening. The fermentation tank module 111 may include a fermentation case 160 and the fermentation tank 112 accommodated in the fermentation case 160 and having an inner space S1. Insulation (not shown) may be provided between the fermentation case 160 and the fermentation tank 112. The fermentation tank module 111 may include a lid seating body 179 on which the fermentation lid 107 may be seated.

Each of the fermentation case 160 and the fermentation tank 112 may be provided as an assembly of a plurality of members or components. The fermentation case 160 may define an outer appearance of the fermentation tank module 111.

The fermentation lid 107 may seal an inside of the fermentation tank module 111 and be disposed on the fermentation tank module 111 to cover the opening. A main channel, more particularly, a main channel connecting portion 115 connected to the second main channel 42 may be provided in the fermentation lid 107.

The fermentation container 12 may be accommodated in the fermentation tank 112. The fermentation container 12 may be provided as a separate container so that beverage ingredients and a finished beverage do not stain the inner wall of the fermentation tank 112. The fermentation container 12 may be separably disposed on or in the fermentation tank 112. The fermentation container 12 may be seated on or in the fermentation tank 112 to ferment the beverage within the fermentation tank 112. After the fermentation container 12 is used, the fermentation container 12 may be removed from the fermentation tank 112. The beverage may be made or brewed or fermented in the fermentation container 12, and may be stored in the fermentation tank 12 until dispensed to an outside of the beverage maker.

The fermentation container 12 may be a pack containing ingredients for making a beverage. The fermentation container 12 may be made of a flexible material. Thus, the fermentation container 12 may be easily inserted into the fermentation tank 112 and may be contracted and expanded by a pressure applied to an inside or an outside of the fermentation container 12. However, the present technique is not limited thereto. For example, the fermentation container 12 may be made of a PET material.

The fermentation container 12 may have a beverage-making space S2 in which beverage ingredients may be accommodated, and the beverage made. The fermentation container 12 may have a size less than a size of inner space S1 of the fermentation tank 112.

The fermentation container 12 may be inserted into and accommodated in the fermentation tank 112 in a state in which the ingredients are contained in the fermentation container 12, or may be inserted into and accommodated in the fermentation tank 112 in an empty state and the ingredients may be subsequently added therein. The fermentation container 12 may be inserted into the fermentation tank 112 and then accommodated in the fermentation tank 112 in a state in which the fermentation lid 107 is opened.

The fermentation lid 107 may seal the fermentation tank 112 after the fermentation container 12 is inserted into the fermentation tank 112. The fermentation container 12 may assist fermentation of the ingredients in a state in which the fermentation container 12 is accommodated in the inner space S1 sealed by the fermentation container 112 and the fermentation lid 107. The fermentation container 12 may be expanded by pressure therein during the making of the beverage. The fermentation container 12 may be pressed from outside of the fermentation container 12 by air supplied within the fermentation tank 112 when the beverage contained in the fermentation container 12 is desired to be dispensed. The air may be supplied between an inner surface of the fermentation tank 112 and the fermentation container 12, i.e. an outer surface of the fermentation container 12.

The fermentation tank 112 may be disposed in the fermentation case 160. The fermentation tank 112 may have an outer circumferential surface and an outer bottom surface, which may be spaced apart from an inner surface of the fermentation case 160. The outer circumferential surface of the fermentation tank 112 may be spaced apart from an inner circumference of the fermentation case 160, and the outer bottom surface of the fermentation tank 112 may be spaced apart from an inner bottom surface of the fermentation case 160.

The insulation (not shown) may be provided between the fermentation case 160 and the fermentation tank 112. The insulation may be disposed in the fermentation case 160 to surround the fermentation tank 112. Thus, a temperature of the fermentation tank 112 may be maintained constant. The insulation may be made of a material, such as foamed polystyrene or polyurethane, which has a high thermal insulating performance and absorbs vibration.

The fermentation tank 112 may include a temperature sensor 16 that measures a temperature of the fermentation tank 112. The temperature sensor 16 may be mounted on the outer circumferential surface of the fermentation tank 112. The temperature sensor 16 may be disposed below an evaporator 134 wound around the fermentation tank 112. The temperature sensor 16 may measure or sense the temperature of the fermentation tank 112 and thereby optionally sense the temperature of an inside of the fermentation tank 112, directly or indirectly.

A temperature controller 11 may change an inner temperature of the fermentation tank module 111. The temperature controller 11 may change a temperature of the fermentation tank 112. The temperature controller 11 may heat or cool the fermentation tank 112 to control a temperature of the fermentation tank 112 at an optimal temperature for fermenting the beverage.

The temperature controller 11 may include at least one of a refrigerant cycle device 13 and/or a heater 14. However, the present technique is not limited thereto. For example, the temperature controller 11 may include a thermoelement (TEM).

The refrigerant cycle device 13 may control the temperature of the fermentation tank 112 to cool a temperature of the fermentation tank 112. The refrigerant cycle device 13 may include a compressor, a condenser, an expansion mechanism, and the evaporator 134.

The evaporator 134 may contact the outer circumferential surface of the fermentation tank 112. The evaporator 134 may be provided as an evaporation tube wound around the outer circumferential surface of the fermentation tank 112. The evaporator 134 may be accommodated between the fermentation tank 112 and the insulation to cool the fermentation tank 112 insulated by the insulation.

The temperature controller 11 may include heater 14 that heats the fermentation tank 112. The heater 14 may contact the outer bottom surface of the fermentation tank 112. The heater 14 may be provided as a heat generation heater that generates heat when power is applied. The heater 14 may be provided as a plate heater. Thus, natural convection of a fluid may be generated inside of the fermentation tank 112 by the evaporator 134 and the heater 14, and temperature distribution inside of the fermentation tank 112 and the fermentation container 12 may be uniform.

As described above, the main channels 41 and 42 may include first main channel 41 that connects the fluid supply module 5 to the ingredient supplier 3 and second main channel 42 that connects the ingredient supplier 3 to the fermentation module 1. That is, the first main channel 41 may guide a fluid, such as water supplied from the fluid supply module 5 to the ingredient supplier 3, and the second main channel 42 may guide a mixture of ingredients and the fluid, which are extracted from the ingredient supplier 3, to the fermentation module 1.

The first main channel 41 may have a first end 41a connected to the fluid supply module 5 and a second end connected to the ingredient supplier 3, more particularly, an inlet 31a of an initial ingredient receiver 31, which will be described hereinafter.

An ingredient supply valve 310 that opens and closes the first main channel 41 may be installed in the first main channel 41. The ingredient supply valve 310 may be provided in the ingredient supplier 3.

The ingredient supply valve 310 may be opened when additives accommodated in the ingredient receivers 31, 32, and 33 are input to open the first main channel 41. The ingredient supply valve 310 may also be opened when the ingredient receivers 31, 32, and 33 are cleaned to open the first main channel 41.

The second main channel 42 may have a first end connected to the main channel connecting portion 115 of the fermentation module 1 and a second end connected to the ingredient supplier 3, more particularly, an outlet 33b of a final ingredient receiver 33, which will be described hereinafter.

A main valve 40 that opens and closes the second main channel 42 may be installed in the second main channel 42. Also, a main check valve 314 that allows fluid to flow from the ingredient supplier 3 to the fermentation module 1 may be installed in the second main channel 42. That is, the main check valve 314 may prevent the fluid from flowing back to the ingredient supplier 3. The main check valve 314 may be disposed between the main valve 40 and the ingredient supplier 3 with respect to the second main channel 42.

The main valve 40 may be opened to open the second main channel 42 when fluid is supplied to the fermentation container 12. The main valve 40 may be closed to close the second main channel 42 while the fermentation tank 112 is cooled. The main valve 40 may be opened to open the second main channel 42 when air is injected into the fermentation container 12. The main valve 40 may be opened to open the second main channel 42 when ingredients are supplied into the fermentation container 1. The main valve 40 may be closed to seal the inside of the fermentation container 12 during fermentation of the ingredients. The main valve 40 may be closed to seal the inside of the fermentation container 12 when the beverage is aged and stored. The main valve 40 may be opened to open the second main channel 42 when the beverage is dispensed by the beverage dispenser 6. The beverage within the fermentation container 1 may pass through the main valve 40 to flow to the beverage dispenser 6.

The main channels 41 and 42 may be provided as one continuous channel when the beverage maker does not include the ingredient supplier 3. When the beverage maker includes the ingredient supplier 3, the beverage maker may include bypass channel 43 configured to allow fluid or air to bypass the ingredient receivers 31 and 32.

The bypass channel 43 may bypass the ingredient receivers 31, 32, and 33 and then be connected to the first main channel 41 and the second main channel 42. The bypass channel 43 may have a first end 43a connected to the first main channel 41 and a second end 43b connected to the second main channel 42. The first end 43a of the bypass channel 43 may be connected to the first main channel 41 between the fluid supply module 5 and the ingredient supply valve 310 and the second end 43b may be connected to the second main channel 42 between the main valve 40 and the ingredient supplier 3.

A bypass valve 35 that opens and closes the bypass channel 43 may be installed in the bypass channel 43. The bypass valve 35 may be opened to open the bypass channel 43 when fluid supplied from the fluid supply module 5 is supplied to the fermentation container 12. The bypass valve 35 may be opened to open the bypass channel 43 when air injected from the air injector 8 is supplied to the fermentation container 12. The bypass valve 35 may be opened to open the bypass channel 43 when the bypass channel 43 is cleaned.

A bypass check valve 324 that allows fluid to flow from the first main channel 41 to the second main channel 42 may be installed in the bypass channel 43. That is, the fluid may flow only from the first main channel 41 to the second main channel 42, but may not flow in the opposite direction. The bypass check valve 324 may be disposed between the bypass valve 35 and the second main channel 42 with respect to the bypass channel 43.

When beer is made using the beverage maker, ingredients for making the beer may include water, malt, yeast, hop, and flavoring additives, for example. The beverage maker may include all of the ingredient supplier 3 and the fermentation container 12. The ingredients for making the beverage may be accommodated separately in the ingredient supplier 3 and the fermentation container 12. That is, a portion of the ingredients for making the beverage may be accommodated in the fermentation container 12, and the remaining ingredients may be accommodated in the ingredient supplier 3. The remaining ingredients accommodated in the ingredient supplier 3 may be supplied to the fermentation container 12 together with the fluid supplied from the fluid supply module 5 and mixed with the portion of the ingredients accommodated in the fermentation container 12.

A main ingredient that is essential for making a beverage may be accommodated in the fermentation container 12, and the other ingredients or additives added to the main ingredient may be accommodated in the ingredient supplier 3. In this case, the additives accommodated in the ingredient supplier 3 may be mixed with fluid supplied from the fluid supply module 5 and supplied to the fermentation container 12 and then mixed with the main ingredient accommodated in the fermentation container 12.

An amount of the main ingredient accommodated in the fermentation container 12 may be greater than an amount of other ingredients. For example, when beer is made, the main material may be malt of malt, yeast, hop, and flavoring additives. Also, the additive accommodated in the ingredient supplier 3 may be the other ingredients except for the malt of the ingredients for making beer, for example, yeast, hop, and flavoring additives.

The beverage maker may not include the ingredient supplier 3 but may include the fermentation container 12. In this case, the main ingredient may be accommodated in the fermentation container 12, and the user may directly put the additives into the fermentation container 12.

If the beverage maker includes both the ingredient supplier 3 and the fermentation container 12, the beverage may be more easily made. Hereinafter, a case in which the beverage maker includes both the ingredient supplier 3 and the fermentation container 12, will be described as an example. However, the present technique is not limited to the case in which the beverage maker includes both the ingredient supplier 3 and the fermentation container 12.

The ingredients within the fermentation container 12 may be fermented over time, and the beverage made in the fermentation container 12 may flow to the second main channel 42 through the main channel connecting portion 115 and also flow from the second main channel 42 to the beverage dispenser 6 to be dispensed.

The ingredients that are necessary for making the beverage may be accommodated in the ingredient supplier 3, and the fluid supplied from the fluid supply module 5 may pass through ingredient supplier 3. For example, when the beverage made in the beverage maker is beer, the ingredients accommodated in the ingredient supplier 3 may be yeast, hop, and flavoring additives, for example.

The ingredients accommodated in the ingredient supplier 3 may be directly accommodated into the ingredient receivers 31, 32, and 33 provided in the ingredient supplier 3. At least one ingredient receiver 31, 32, and 33 may be provided in the ingredient supplier 3. Also, a plurality of ingredient receivers 31, 32, and 33 may be provided in the ingredient supplier 3. The plurality of ingredient receivers 31, 32, and 33 may be partitioned with respect to each other.

Inlets 31a, 32a, and 33a, through which the fluid may be introduced, and outlets 31b, 32b, and 33b, through which the fluid may be discharged, may be provided in the ingredient receivers 31, 32, and 33, respectively. The fluid introduced into the inlet of one ingredient receiver may be mixed with the ingredients within the ingredient receivers and then discharged through the outlet.

The ingredients accommodated in the ingredient supplier 3 may be accommodated in ingredient containers C1, C2, and C3. The ingredient containers C1, C2, and C3 may be accommodated in the ingredient receivers 31, 32, and 33, and each of the ingredient receivers 31, 32, and 33 may be referred to as an ingredient container mount. The ingredient containers C1, C2, and C3 may be a capsule, or a pod, for example; however, the present technique is not limited thereto.

When the ingredients are accommodated in the ingredient containers C1, C2, and C3, the ingredient supplier 3 may be configured so that the ingredient containers C1, C2, and C3 may be seated therein and withdrawn therefrom. The ingredient supplier 3 may be provided as an ingredient container kit assembly in which the ingredient containers C1, C2, and C3 are separably accommodated.

For example, a first additive, a second additive, and a third additive may be accommodated in the ingredient supplier 3. The first additive may be yeast, the second additive may be hop, and the third additive may be a flavoring additive. The ingredient supplier 3 may include a first ingredient container mount 31 in which a first ingredient container C1 containing the first additive may be accommodated, a second ingredient container mount 32 in which a second ingredient container C2 containing the second additive may be accommodated, and a third ingredient container mount 33 in which a third ingredient container C3 containing the third additive may be accommodated.

The ingredients contained in the ingredient receivers or the ingredient containers C1, C2, and C3 may be extracted by a fluid pressure of fluid supplied from the fluid supply module 5. When the ingredients are extracted by the fluid pressure, the fluid supplied from the fluid supply module 5 to the first main channel 41 may pass through the ingredient receivers or the ingredient containers C1, C2, and C3 and then may be mixed with the ingredients, and the ingredients accommodated in the ingredient receivers or the ingredient containers C1, C2, and C3 may flow to the second main channel together with the fluid.

A plurality of different additives may be accommodated separately in the ingredient supplier 3. For example, when beer is made, the plurality of additives accommodated in the ingredient supplier 3 may be yeast, hop, and a flavoring additive, which may be accommodated separated from each other.

When the plurality of ingredient receivers is provided in the ingredient supplier 3, the plurality of ingredient receivers 31, 32, and 33 may be connected in series to each other in a flow direction of the fluid. That is, the ingredient supplier 3 may include at least one connecting channel 311 and 312 that connects the outlet of one ingredient receiver of the plurality of ingredient receivers 31, 32, and 33 to the inlet of another ingredient receiver.

Also, the plurality of ingredient receivers 31, 32, and 33 may include an initial ingredient receiver 31 and a final ingredient receiver 33. The plurality of ingredient receivers 31, 32, and 33 may include an intermediate ingredient receiver 32.

The inlet 31a of the initial ingredient receiver 31 may be connected to the first main channel 41, and the outlet 33b of the final ingredient receiver 33 may be connected to the second main channel 42. The intermediate ingredient receiver 32 may be disposed between the first ingredient receiver 31 and the second ingredient receiver 33 in the flow direction of the fluid. The inlet 32a and the outlet 32b of the intermediate ingredient receiver 32 may be connected to different connecting channels 311 and 312 from each other.

As illustrated in FIG. 1, when three ingredient receivers are provided in the ingredient supplier 3, the outlet 31b of the initial ingredient receiver 31 may be connected to the inlet 32a of the intermediate ingredient receiver 32 through the first connecting channel 311, and the outlet 32b of the intermediate ingredient receiver 32 may be connected to the inlet 33a of the final ingredient receiver 33 through the second connecting channel 312. The fluid introduced into the inlet 31a of the final ingredient receiver 31 through the first main channel 41 may flow to the first connecting channel 311 through the outlet 31b together with the first additive accommodated in the initial ingredient receiver 31.

The fluid, which may be a mixture of water and a first additive, introduced into the inlet 32a of the intermediate ingredient receiver 32 through the first main channel 311 may flow to the second connecting channel 312 through the outlet 32b together with the second additive accommodated in the intermediate ingredient receiver 32. The fluid, which may now be a mixture of water and first and second additives, introduced into the inlet 33a of the final ingredient receiver 33 through the second main channel 312 may flow to the second connecting channel 42 through the outlet 33b together with a third additive accommodated in the final ingredient receiver 33. The fluid, which may now be a mixture of water and first, second, and third additives, discharged through the second main channel 42 may be guided to the main channel connecting portion 115 of the fermentation module 1 and then introduced into the fermentation container 12.

However, the configuration of the ingredient supplier is not limited thereto. For example, when the intermediate ingredient receiver is not provided, two ingredient receivers may be provided in the ingredient supplier 3. In this case, one ingredient receiver may be the initial ingredient receiver, and the other ingredient receiver may be the final ingredient receiver. The outlet of the initial ingredient receiver and the inlet of the final ingredient receiver may be connected to each other by the connecting channel.

For another example, when a plurality of the intermediate ingredient receiver is provided, four or more ingredient receivers may be provided in the ingredient supplier 3. In this case, one ingredient receiver may be the initial ingredient receiver, another ingredient receiver may be the final ingredient receiver, and the remaining ingredient receiver may be the intermediate ingredient receiver. In this case, as the connection between the ingredient receivers in series is easily understood by a person skilled in the art, detailed descriptions thereof have been omitted.

As the plurality of ingredient receivers 31, 32, and 33 may be connected in series to each other, the channel configuration of the ingredient supplier 3 may be simplified. Further, as the additives contained in the ingredient containers C1, C2, and C3 may be extracted all at once, a time taken to extract the additives may decrease. Furthermore, as the user does not have to worry about a mounting order of the ingredient containers C1, C2, and C3, malfunction due to the mounting of the ingredient containers C1, C2, and C3 in an erroneous order may not occur. Also, fluid leakage in the ingredient supplier 3 may be minimized to improve reliability.

When the ingredients accommodated in the ingredient supplier 3 are accommodated in the ingredient containers C1, C2, and C3, the initial ingredient receiver 31 may be referred to as "an initial ingredient container mount", the intermediate ingredient receiver 32 may be referred to as an "intermediate ingredient container mount", and the final ingredient receiver 33 may be referred to as a "final ingredient container mount".

The fluid supply module 5 may include a tank 51, a pump 52 that pumps a fluid, such as water within the tank 51, and a heater 53 that heats the fluid pumped by the pump 52. The tank 51 and the pump 52 may be connected to a tank discharge channel 55a, and the fluid contained in the tank 51 may be introduced into the pump 52 through the tank discharge channel 55a.

The pump 52 and a first end of the first main channel 41 may be connected to a supply channel 55b, and the fluid discharged from the pump 52 may be guided to the first main channel 41 through the supply channel 55b. A flow meter 56 that measures a flow rate of the fluid discharged from the tank 51 may be installed in the tank discharge channel 55a.

A flow rate control valve 54 that controls a flow rate of the fluid discharged from the tank 51 may be installed in the tank discharge channel 55a. The flow rate control valve 54 may include a step motor.

A thermistor 54a that measures a temperature of the fluid discharged from the tank 51 may be installed in the tank discharge channel 55a. The thermistor 54a may be built into the flow rate control valve 54.

A check valve 59 that prevents the fluid from flowing back to the pump 52 may be installed in the supply channel 55b. Also, the heater 53 may be installed in the supply channel 55b. A thermal fuse 58 that interrupts a circuit to cutoff current applied to the heater 53 when a temperature is high may be installed in the heater 53.

The fluid supply module 5 may include a safety valve 53a. The safety valve 53a may communicate with an inside of a heater case of the heater 53. The safety valve 53a may restrict a maximum inner pressure of the heater case. For example, the safety valve 53a may restrict the maximum inner pressure of the heater case to a pressure of about 3.0 bar.

The fluid supply module 5 may include a temperature sensor 57 that measures a temperature of the fluid passing through the heater 53. The temperature sensor 57 may be installed in the heater 53. Alternatively, the temperature sensor 57 may be disposed at a portion of the supply channel 55b behind the heater 53 in the flow direction of fluid. Also, the temperature sensor 57 may be installed in the first main channel 41.

When the pump 52 is driven, the fluid within the tank 51 may be introduced into the pump 52 through the tank discharge channel 55a, and the fluid discharged from the pump 52 may be heated in the heater 53 while flowing through the supply channel 55b and then be guided to the first main channel 41.

The beverage dispenser 6 may be connected to the second main channel 42. The beverage dispenser 6 may include the dispenser 62 that dispenses a finished beverage and the beverage dispensing channel 61 that connects to the dispenser 62 to the second main channel 42.

The beverage dispensing channel 61 may have a first end 61a connected between the main check valve 314 and the main valve 40 with respect to the second main channel 42 and a second end connected to the dispenser 62. A beverage dispensing valve 64 that opens and closes the beverage dispensing channel 61 may be installed in the beverage dispensing channel 61.

The beverage dispensing valve 64 may be opened to open the beverage dispensing channel 61 when the beverage is dispensed. The beverage dispensing valve 64 may be opened to open the beverage dispensing channel 61 when residual fluid is removed. The beverage dispensing valve 64 may be opened to open the beverage dispensing channel 61 when the beverage dispenser is cleaned.

An anti-foaming portion (not shown) may be provided in the beverage dispensing channel 61, and an amount of foam of the beverage flowing from the second main passage 42 to the beverage dispensing channel 61 may be minimized while passing through the anti-foaming portion. A mesh that filters the foam may be provided in the anti-foaming portion (not shown).

When the beverage is dispensed, the beverage dispensing valve 64 may be opened. When the beverage is not dispensed, the beverage dispensing valve 64 may be maintained in a closed state.

The gas discharger 7 may be connected to the fermentation module 1 to discharge gas generated in the fermentation container 12. The gas discharger 7 may include a gas discharge channel 71 connected to the fermentation module 1, a gas pressure sensor 72 installed in the gas discharge channel 71, and a gas discharge valve 73 connected upstream of the gas pressure sensor 72 in the gas discharge channel 71 in a gas discharge direction, i.e. from the fermentation module 1 towards an outside of the fermentation module 1.

The gas discharge channel 71 may be connected to the fermentation module 1, more particularly, to the fermentation lid 107. A gas discharge channel connecting portion 121 to which the gas discharge channel 71 may be connected may be provided in the fermentation lid 107.

Simply put, the discharge channel 71 may be fluidly connected to the fermentation module 1. In other words, discharge channel 71 may be connected to the fermentation container 12, or may be connected to the space where the beverage, e.g. the beer, is made or fermented.

The gas within the fermentation container 12 may flow into the gas discharge channel 71 and the gas pressure sensor 72. The gas within the fermentation container 12 may flow into the gas discharge channel 71 and the gas pressure sensor 72 through the gas discharge channel connecting portion 121. The gas pressure sensor 72 may detect a pressure of the gas discharged to the gas discharge channel 71 through the gas discharge channel connecting portion 121 within the fermentation container 12. In other words, the gas pressure sensor 72 may detect a pressure of the gas within the fermentation container 12.

The gas discharge valve 73 may be opened when the air is injected into the fermentation container 12 by the air injector 8. The beverage maker may uniformly mix the malt with the fluid by injecting air into the fermentation container 12. Foam generated in the liquid malt may be discharged from an upper portion of the fermentation container 12 to the outside through the gas discharge channel 71 and the gas discharge valve 73. The gas discharge valve 73 may be opened during the fermentation operation and then closed.

The gas discharger 7 may include a safety valve 75 connected to the gas discharge channel 71. The safety valve 75 may be connected upstream of the gas pressure sensor 71 in the gas discharge channel 71 in the gas discharge direction. The safety valve 75 may restrict a maximum pressure of the fermentation container 12 and the gas discharge channel 71. For example, the safety valve 75 may restrict the maximum pressure of the fermentation container 12 and the gas discharge channel 71 to a pressure of about 3.0 bar.

The gas discharger 7 may include a pressure release valve 76. The pressure release valve 76 may be connected to the gas discharge channel 71. The pressure release valve 76 and the gas discharge valve 73 may be selectively opened/closed. The gas discharge channel 71 may be branched to be respectively connected to the gas discharge valve 73 and the pressure release valve 76.

A noise reducing device 77 may be mounted on the pressure release valve 76. The noise reducing device 77 may include at least one of an orifice structure or a muffler structure, for example.

When the pressure release valve 76 is opened, an inner pressure of the fermentation container 12, i.e. the pressure inside the fermentation container 12, may be gradually decreased as compared with the gas discharge valve 73 due to the noise reducing device 77. When fermentation of the beverage progresses, the pressure release valve 76 may be opened to release the pressure in a state in which the inner pressure of the fermentation container 12 increases. The noise reducing device 77 may effectively reduce noise generated due to a difference in pressure between the inside and outside of the fermentation container 12. Therefore, the pressure release valve 76 may be open/close-controlled in a fermentation operation with relatively high internal pressure in order to minimize noise level.

The air injector 8 may be connected to the supply channel 55b or the first main channel 41 to inject air. Hereinafter, for convenience of description, a case in which the air injector 8 is connected to the supply channel 55b will be described as an example.

The air injector 8 may be connected to an opposite side of a sub channel 91, which will be described hereinafter, with respect to the heater 53. The air injected by the air injector 8 may pass through the heater 53 to flow to the sub channel 91 together with residual fluid within the heater 53. Thus, the residual fluid within the heater 53 may be removed to maintain a clean state of the heater 53.

Alternatively, air injected from the air injector 8 to the first main channel 41 may successively pass through the bypass channel 43 and the second main channel 42 and then be injected into the fermentation container 12. Thus, stirring or aeration may be performed in the fermentation container 12.

Alternatively, air injected from the air injector 8 to the first main channel 41 may be guided to the ingredient supplier 3 to flow to the ingredient container mounts 31, 32, and 33. Residual fluid or residue within the ingredient containers C1, C2, and C3 or the ingredient container mounts 31, 32, and 33 may flow to the second main channel 42 due to air injected by the air injector 8. The ingredient containers C1, C2, and C3 and the ingredient container mounts 31, 32, and 33 may be cleanly maintained by the air injected by the air injector 8.

The air injector 8 may include an air injection channel 81 connected to the supply channel 55b or the first main channel 41 and an air pump 82 connected to the air injection channel 81. The air pump 82 may pump air to the air injection channel 81. An air injection check valve 83 that prevents fluid flowing to the supply channel 55b by the pump 52 from being introduced into the air pump 82 through the air injection channel 81 may be installed in the air injection channel 81.

The air injector 8 may include an air filter 82a. The air filter 82a may be provided in a suction portion of the air pump 82, and thus, external air may be suctioned into the air pump 82 by passing through the air filter 82a. Thus, the air pump 82 may inject clean air into the air injection channel 81.

The air controller 15 may control a pressure between the inner wall of the fermentation tank 112 and the outer surface of the fermentation container 12. The air controller 15 may supply air into a space between the fermentation container 12 and the fermentation tank 112. On the other hand, the air controller 15 may exhaust the air within the space between the fermentation container 12 and the fermentation tank 112 to the outside.

The air controller 15 may include an air supply channel 154 connected to the fermentation module 1, and an exhaust channel 157 connected to the air supply channel 154 to exhaust the air to the outside. The air supply channel 154 may have a first end connected to the first main channel 41 and a second end connected to the fermentation module 1.

The air supply channel 154 may be connected to the fermentation module 1, more particularly, the fermentation lid 107. An air supply channel connecting portion 117 to which the air supply channel 154 may be connected may be provided in the fermentation module 1. The air supply channel connecting portion 117 may communicate with the space between the inner wall of the fermentation tank 112 and the outer surface of the fermentation container 12.

The air injected from the air injector 8 to the first main channel 41 may be guided between the outer surface of the fermentation container 12 and the inner wall of the fermentation tank 112 through the air supply channel 154. The air injector 8 may function as an air supplier that supplies air into the space between the fermentation container 12 and the fermentation tank 112 together with the air supply channel 154.

As described above, the air supplied into the fermentation tank 112 may press the fermentation container 12 between the outer surface of the fermentation container 12 and the inner wall of the fermentation tank 112. The beverage within the fermentation container 12 may be pressed by the fermentation container 12 pressed by the air. When the main valve 40 and the beverage dispensing valve 64 are opened, the beverage may pass through the main channel connecting portion 115 to flow to the second main channel 42. The beverage flowing from the fermentation container 12 to the second main channel 42 may be dispensed to the outside through the beverage dispenser 6.

The air pump 82 may supply air so that a predetermined pressure occurs between the fermentation container 12 and the fermentation tank 112. Thus, a pressure at which the beverage within the fermentation container 12 is easily dispensed may occur between the fermentation container 12 and the fermentation tank 112.

The air pump 82 may be maintained in an off state while the beverage is dispensed. When the beverage is completely dispensed, the air pump 82 may be driven for a next beverage dispensing and then stopped.

Thus, when the beverage is finished, the beverage maker may dispense the beverage within the fermentation container 12 to the beverage dispenser 6 in a state in which the fermentation container 1 is disposed within the fermentation module 1 without withdrawing the fermentation container 12 to the outside of the fermentation module 1.

The air controller 15 may include a separate air supply pump with respect to the air injector 8. In this case, the air supply channel 154 may be connected to the air supply pump, but may not be connected to the first main channel 41. However, the injection of air into the fermentation container 12 by the air pump 82 and the supplying of air into the space between the fermentation container 12 and the fermentation tank 112 may be combined with each other to realize a compact product and reduce manufacturing costs.

The exhaust channel 157 may function as an air exhaust passage, through which the air between the fermentation container 12 and the fermentation tank 112 may be exhausted to the outside, together with a portion of the air supply channel 154. The exhaust channel 157 may be disposed outside of the fermentation module 1. The exhaust channel 157 may be connected to a portion of the air supply channel 154, which is disposed outside of the fermentation tank 112.

The air supply channel 154 may include a first channel connected between a connecting portion 157a connected to the first main channel 41 and the exhaust channel 157 and a second channel connected between the connecting portion 154a connected to the exhaust channel 157 and the air supply channel connecting portion 117. The first channel may be an air supply channel that guides the air pumped by the air pump 82 to the second channel. Also, the second channel may be an air supply and exhaust-combined channel that supplies the air passing through the air supply channel into the space between the fermentation tank 112 and the fermentation container 12 or guides the air discharged from the space between the fermentation tank 112 and the fermentation container 12 the connecting channel 157.

The exhaust channel 157 may be connected to the exhaust valve 156 that opens and closes the exhaust channel 157. The exhaust valve 156 may be opened so that the air between the fermentation container 12 and the fermentation tank 112 may be exhausted to the outside when the fermentation container 12 is expanded while the beverage is made. The exhaust valve 156 may be opened when the fluid is supplied by the fluid supply module 5. The exhaust valve 156 may be opened when the air is injected by the air injector 8.

The exhaust valve 156 may be opened so that the air between the fermentation container 12 and the fermentation tank 112 is exhausted when the beverage within the fermentation container 12 is completely dispensed. The user may take the fermentation container 12 out of the fermentation tank 112 when the beverage is completely dispensed. This is done because safety accidents occur when the inside of the fermentation tank 112 is maintained at a high pressure. The exhaust valve 156 may be opened when the beverage within the fermentation container 12 is completely dispensed.

The air controller 15 may include an air supply valve 159 that restricts the air pumped by the air pump 82 and supplied between the fermentation container 12 and the fermentation tank 112. The air supply valve 159 may be installed in the air supply channel 154. That is, the air supply valve 159 may be installed between the connecting portion 154a of the first main channel 41 and the connecting portion 157a of the exhaust channel 157 in the air supply channel 154.

The sub channel 91 may connect the fluid supply module 5 to the beverage dispenser 6. That is, the sub channel 91 may have a first end 91a connected to the supply channel 55b and a second end 91b connected to the beverage dispensing channel 61.

The sub channel 91 may be connected between the pump 52 and the heater 53 with respect to the supply channel 55b. Also, the sub channel 91 may be connected to the connecting portion 61a of the second main channel 42 and the beverage dispensing valve 64 with respect to the beverage dispensing channel 61.

The fluid supplied by the pump 52 and the air pumped by the air pump 82 may be guided to the beverage dispensing channel 61 through the sub channel 91 and then may be dispensed to the dispenser 62. Thus, residual fluid or beverage remaining in the beverage dispenser 6 may be removed.

A sub valve 92 that opens and closes the sub channel 91 may be installed in the sub channel 91. The sub valve 92 may be opened to open the sub channel 91 when the beverage is dispensed, or cleaning is performed.

A sub check valve 93 that prevents the beverage in the beverage dispensing channel 61 from flowing back to the fluid supply module 5 may be installed in the sub channel 91. The sub check valve 93 may be disposed between the sub valve 92 and the beverage dispensing channel 61 with respect to the sub channel 91.

The sub channel 91 may function as a residual fluid removing channel of the fluid supply module 5. For example, when the air pump 82 is turned on in a state in which the air supply valve 159, the bypass valve 35, and the ingredient supply valve 310 are closed, the sub valve 92 is opened, and the air injected into the air injection channel 81 may pass through the heater 53 to flow to the sub channel 91. Then, the air may pass through the sub valve 92 to flow to the beverage dispensing channel 61 and then be dispensed to the dispenser 62. In this operation, the air may be dispensed together with fluid from the fluid supply module 5, more particularly, the residual fluid remaining in the heater 53 and the supply channel 55b so that residual fluid may be removed.

In addition, the sub channel 91 may function as a cleaning channel. That is, a beverage may be partially dispensed by the dispenser 62, and when a long period of time has elapsed before a next beverage dispensing, fluid may flow to the sub channel 91 to clean the dispenser 62 before the next beverage dispensing is performed.

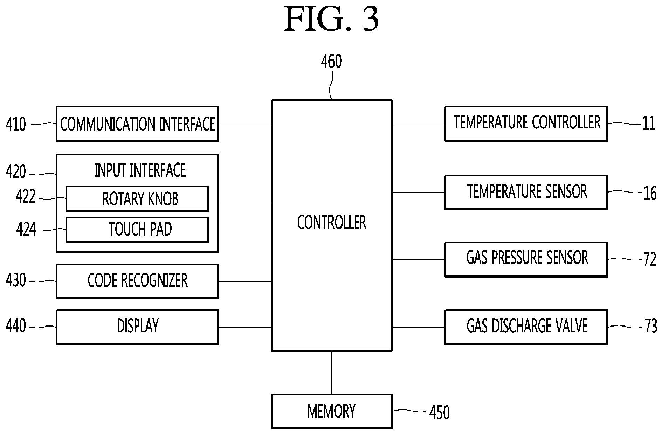

The beverage maker may include a controller 460 (shown in FIG. 3) configured to control one or more of the above described valves, such as, the gas discharge valve 73. The controller 460 may be configured to control opening and/or closing of one or more of the above described valves, such as, of the gas discharge valve 73.

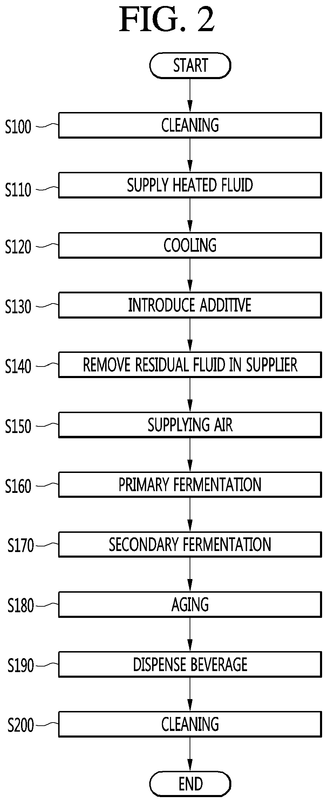

FIG. 2 is a flowchart of a method for controlling a beverage maker according to an exemplary embodiment of the present technique.

The operation of the beverage maker may include cleaning operations (S100 and S200) for cleaning one or more of the different channels of the beverage maker. The cleaning operations (S100 and S200) may be separately performed with respect to a beverage making operation. The cleaning operations (S100 and S200) may be performed before and/or after the beverage making operation for example, before the ingredients are provided into the beverage maker and/or after the beverage made in the beverage maker has been dispensed to the outside of the beverage maker.

Also, the cleaning operations (S100 and S200) may be performed by a user input during the beverage making operation. In this case, like a primary fermentation operation (S160) or a secondary fermentation operation (S170), which will be described hereinafter, the cleaning operations (S100 and S200) may be performed while the channel connected to the fermentation module 1 is closed, and the ingredients are not contained in the ingredient suppler 3.

The cleaning operations (S100 and S200) may be performed in a state in which the ingredient containers are accommodated in the ingredient supplier 3, and the fermentation container 12 is accommodated in the fermentation module 1. The user may input a cleaning command through an input unit 420 (referring to FIG. 3) of the beverage maker, a remote controller, or a portable terminal. The controller 460 may control the beverage maker to perform the cleaning operations (S100 and S200) according to the input of the cleaning command.

Also, the user may input a beverage making command through the input unit 420, a remote controller, or a portable terminal. The controller 460 may control the beverage maker to perform the cleaning operations (S100 and S200) before and after the beverage making operation according to the input of the beverage making operation.

The controller 460 may supply a fluid, such as water of the tank 51 to the inner channels and the ingredient supplier 3 in the cleaning operation. The supplied fluid may be discharged to the outside through the dispenser 62 together with foreign matter or residue present in the channels and the ingredient supplier 3.

In the beverage maker, the cleaning operation may be performed during a predetermined cleaning time. After the predetermined cleaning time, the cleaning operation may be completed.

The beverage making operation of making a beverage may be performed in the beverage maker. The user may seat the fermentation container 12 on or in the fermentation module 1 for the beverage making operation. In this case, some (for example, malt) of ingredients may be received in the fermentation container 12. The malt may be received in the form of malt oil.

The user may insert the plurality of ingredient containers C1, C2, and C3 into the ingredient supplier 3 before or after the fermentation container 12 is seated. The user may input the beverage making command through the input unit 420, the remote controller, or the mobile terminal. The controller 460 may control the beverage maker to perform the beverage making operation according to the input of the beverage making command.

The beverage making operation may include a fluid supply operation (S110). The fluid supply operation (S110) may be a liquid malt formation operation of mixing the malt in the fermentation container 12 with the heated fluid to form liquid malt.

The controller 460 may turn on the pump 52 to introduce the fluid from the tank 51 into the fermentation container 12, in the fluid supply operation (S110). In order to introduce heated fluid into the fermentation container 12, the fluid supply module 5 may include the heater 53. The fluid discharged from the tank 51 may pass through the pump 52, may flow to the heater 53, and may be heated by the heater 53. Fluid heated by the heater 53 may be introduced into the fermentation container 12 through a channel between the fluid supply module 5 and the fermentation module 1. The heated fluid introduced into the fermentation container 12 may be mixed with the malt contained in the fermentation container 12, and the malt in the fermentation container 12 may be mixed with the fluid and gradually diluted. As the heated fluid is supplied to the fermentation container 12, the malt accommodated in the fermentation container 12 may be quickly uniformly mixed with the heated fluid.

The controller 460 may perform the fluid supply operation (S110) until an amount of accumulated fluid detected by the flow meter 56 reaches a target flow rate, and when the amount of accumulated fluid detected by the flow meter 56 reaches the target flow rate, the fluid supply operation (S110) may be ended. When the fluid supply operation (S110) is complete, the controller 460 may turn off the pump 52 and the heater 53.

The beverage making operation may include a fermentation tank cooling operation (S120). When the fluid supply operation (S110) is complete, the fermentation tank cooling operation (S120) for cooling the fermentation tank 112 or the fermentation container 12 may be performed.

The controller 460 may control the temperature controller 11 to cool the fermentation container 12. The controller 460 may control the refrigerant cycle device 3 to cool the fermentation container 12. When the refrigerant cycle device 3 is driven, the fermentation container 12 may be gradually cooled, and also, the liquid malt accommodated in the fermentation container 12 may be cooled. The controller 460 may control the refrigerant cycle device 13 according to the temperature detected by the temperature sensor 16 installed in the fermentation module 1.

The beverage making operation may include an additive introducing operation (S130). The beverage maker may perform the additive introducing operation (S130) while performing the cooling operation (S120). For example, the beverage maker may perform the additive introducing operation (S130), when the temperature sensed by the temperature sensor 16 reaches a specific temperature value higher than the cooling temperature set for the cooling operation (S120).

In the additive introducing operation (S130), ingredients received in the ingredient supplier 3 may be introduced into the fermentation container 12. The controller 460 may turn on the pump 52. When the pump 52 is turned on, the fluid in the tank 51 may be introduced into the ingredient supplier 3 by passing through the pump 52 and a channel between the fluid supply module 5 and the ingredient supplier 3. Fluid introduced into the ingredient supplier 3 may be mixed with the ingredient contained in the ingredient supplier 3 and introduced into the fermentation container 12 together with the ingredient.

The controller 460 may complete the additive introducing operation (S130) when the accumulated flow rate detected by the flow meter 56 reaches the additive introduction target flow rate from a start of the additive introducing operation (S130). When the additive introducing operation (S130) is completed, the controller 460 may turn off the pump 52.

The beverage making operation may include an ingredient supplier residual fluid removing operation (S140). When the additive introducing operation (S130) is complete, the ingredient supplier residual fluid removing operation (S140) of removing residual fluid from the ingredient supplier 3 may be performed.

In the ingredient supplier residual fluid removing operation (S140), the controller 460 may turn on the air pump 82. When the air pump 82 is turned on, air may be introduced into the ingredient supplier 3 through a channel between the air pump 82 and the ingredient supplier 3. The air introduced into the ingredient supplier 3 may push residual fluid in the ingredient supplier 3 into a channel between the ingredient supplier 3 and the fermentation module 1. The air flowing into the channel may be introduced into the fermentation container 12 together with the residual fluid. Accordingly, ingredients and fluid, which are not extracted, but remain in the ingredient supplier 3, may be entirely introduced into the fermentation container 12.

The controller 460 may turn on the air pump 82 for a predetermined residual fluid removal time and may end the ingredient supplier residual fluid removing operation (S140) after the predetermined residual fluid removal time has elapsed. When the ingredient supplier residual water removing operation (S140) is complete, the controller 460 may turn on the air pump 82.

The beverage making operation may include an air supplying operation (S150). The beverage maker may complete the cooling operation (S120) when the temperature sensed by the temperature sensor 16 is equal to or less than a cooling temperature at least one time after the cooling operation (S120) is commenced and the refrigerant cycle device is turned on. The beverage maker may perform the air supplying operation (S150) of supplying air into the fermentation container 12 to mix a liquid malt, after the cooling operation (S120) is completed.

In the air supplying operation (S150), the controller 460 may turn on the air pump 82. While the air pump 82 is in an ON state, the air may be introduced into the fermentation container 12 by passing through the channel between the air pump 82 and the fermentation module 1. The air introduced into the fermentation container 12 as described above may collide with the liquid malt to help the malt be more uniformly mixed with the heated fluid. In addition, the air colliding with the liquid malt may supply oxygen to the liquid malt. In other words, stirring and aeration may be performed.

The controller 460 may turn on the air pump 82 and may mix the air with the liquid malt for a predetermined mixing time, and may complete the air supplying operation (S150) when the predetermined mixing time has elapsed after the air pump 82 is turned on. In the air supplying operation (S150), the controller 460 may turn off the air pump 82.

The beverage making operation may include the fermentation operation (S160 and S170). The fermentation operation may include a primary fermentation operation (S160) and a secondary fermentation operation (S170). The primary fermentation operation may correspond to an operation in which alcohol is produced in the beverage being made, and the secondary fermentation operation may correspond to an operation in which carbonic acid is produced in the beverage being made.

The controller 460 may control the temperature controller such that the temperature measured by the temperature sensor is maintained at a primary fermentation target temperature in the primary fermentation operation. The controller 460 may periodically open or close, i.e. control to open or close, the gas discharge valve 73 that opens or closes a channel, e.g. the gas discharge channel 71, between the fermentation container 12 and the outside. The controller 460 may determine, and optionally store in the memory 450, the pressure sensed by the gas pressure sensor 72 while the gas discharge valve 73 is closed. The controller 460 may determine completion of the primary fermentation operation (S160), when the variation in the pressure periodically sensed by the gas pressure sensor exceeds a primary fermentation reference pressure variation.

The controller 460 may commence the secondary fermentation operation (S170) after the primary fermentation operation (S160) is completed, i.e. determined to be completed by the controller 460. The controller 460 may control the temperature controller such that the temperature, as measured by the temperature sensor 16, becomes, i.e. attains and maintains, a secondary fermentation target temperature in the secondary fermentation operation (S170). The secondary fermentation target temperature may be equal to the first fermentation target temperature; however, the present technique is not limited thereto.

The controller 460 may open and close the gas discharge valve 73 based on the inner pressure of the fermentation tank 112 after the secondary fermentation operation (S170) is commenced. When the variation in the pressure sensed by the gas pressure sensor 72 exceeds a secondary fermentation pressure variation, or when the secondary fermentation progress time exceeds the predetermined secondary fermentation time, the controller 460 may determine that the secondary fermentation is completed and may determine end or completion of the secondary fermentation operation (S170).

Alternatively, the controller 460 may open and close the gas discharge valve 73 such that the inner pressure of the fermentation tank 112 is maintained to be within a secondary fermentation pressure range for the predetermined secondary fermentation time. The controller 460 may complete the secondary fermentation operation (S170) when the predetermined secondary fermentation time has elapsed.

The beverage making operation may include an aging operation (S180). When the primary fermentation operation (S160) and the secondary fermentation operation (S170) are completed, the aging operation (S180) may be performed.

The controller 460 may stand by for an aging time in the aging operation (S180), and may control the temperature controller such that the temperature of the beverage is maintained between an upper limit and a lower limit of a target aging temperature for the aging time.

When the aging time has elapsed, the beverage is completely made and aged. However, if necessary, the aging operation (S180) may be omitted and the beverage making may be completed when the secondary fermentation operation (S170) is completed. The controller 460 may display that the beverage making is completed with or without aging, through the display 440 (see FIG. 3).

The controller 460 may maintain the temperature of the fermentation container 12 between an upper limit and a lower limit of a target drinking temperature until a beverage dispensing operation (S190) to be described hereinafter is completed.

According to an exemplary embodiment of the present technique, the beverage maker may further perform the beverage dispensing operation (S190) of dispensing a beverage after the beverage is completely made. In the beverage dispensing operation (S190), the user may dispense a beverage by operating the dispenser 62. When the user opens the dispenser 62, the beverage in the fermentation container 12 may be dispensed through the dispenser 62 after passing through the channel between the fermentation module 1 and the dispenser 62.

The user may dispense the beverage at least once through the dispenser 62. In other words, the beverage dispensing operation may be performed at least once, and the controller 460 may determine whether the beverage dispensing is completed by using information such as a time during which the dispenser 62 is opened.

When the controller 460 determines that all of the beverage in the fermentation container 12 is dispensed, and thus, the beverage dispensing operation is completed, the controller 460 may further perform a cleaning operation (S200) after the beverage making operation and the beverage dispensing operation. The cleaning operation (S200) may be similar to the cleaning operation (S100) before the beverage making operation.

FIG. 3 is a schematic block diagram illustrating components for controlling a beverage maker, according to an exemplary embodiment of the present technique. The components for controlling the beverage maker, which are illustrated in FIG. 3, are not essential components to realize the beverage maker. Accordingly, the beverage maker according to an exemplary embodiment of the present technique may include more than or less than components illustrated in FIG. 3.

Referring to FIG. 3, the beverage maker may include a communication interface 410 to communicate with a terminal, such as a smart phone or a tablet PC, for example, or a server, for example. For example, the controller 460 may receive a request for performing a function of making a beverage from a terminal of the user or recipe information through the communication interface 410. In addition, the controller 460 may transmit various pieces of information, such as an operation of the beverage maker, a beverage making state, and a storage state of the beverage, for example, to the terminal or the server through the communication interface 410.

The communication interface 410 may include a module to support at least one of various wireless/wired communication schemes, which are well known. For example, the communication interface 410 may include a short-range wireless communication module, such as Bluetooth or Near Field Communication (NFC), or a wireless Internet module, such as a wireless local area network (WLAN) module. For example, the NFC module may obtain recipe information corresponding to a beverage preparation pack or a beverage preparation kit from a NFC tag as the NFC tag included in the beverage preparation pack or the beverage preparation kit approaches within a predetermined distance.

The input interface 420 may be configured to receive various requests or commands from a user. For example, the input interface 420 may include a rotary knob 422, a touch pad 424 (or a touch screen), other buttons, and/or a microphone, for example. The controller 460 may receive a request for execution of a beverage making function, recipe information, and control commands for various operations of other beverage makers through the input interface 420, for example.

The beverage maker may include a code recognizer 430 to obtain recipe information. For example, the code recognizer 430 may be implemented with a quick response (QR) code recognizer to recognize a QR code included in a beverage preparation pack or a beverage preparation kit, and obtain recipe information corresponding to the recognized QR code.

The display 440 may output various pieces of information associated with an operation or state of the beverage maker and various pieces of information associated with the beverage which is being made or stored in the beverage maker. The display 440 may be implemented with a liquid crystal display (LCD), a light emitting diode (LED), and/or an organic light emitting diode (OLED) display, for example. Although the following description will be made on the assumption that the display 440 is realized in a cylindrical form, the present technique is not limited thereto and the form of the display 440 may be variously modified.

For example, the display 440 may output the information in a graphic form or a text form. The beverage maker may include a speaker to output the information in the form of a voice. The controller 460 may output the information through various combinations of a graphic, a text, and/or voice using the display 440 and the speaker.

The memory 450 may store various pieces of information or data associated with the operation of the beverage maker. For example, the memory 450 may store recipe information for beverages that may be made or various program data for the operation of the beverage maker. In addition, the memory 450 may store various graphic data associated with screens displayed through the display 440.

In addition, the memory 450 may store values for making beverages corresponding to multiple pieces of recipe information. For example, the values for making the beverages may include a cooling temperature described with reference to FIG. 2, a primary fermentation target temperature, a primary fermentation reference pressure variation, a secondary fermentation target temperature, a secondary fermentation pressure range, or a secondary fermentation time. In addition, the values for making the beverages may include a first open time, a close time, a second open time, for example, which will be described hereinafter.

The controller 460 may control an overall operation of the beverage maker. In this case, the controller 460 may refer to at least one controller. The at least one controller may be implemented in hardware, such as a CPU, an application processor, a microcomputer (or a microcomputer), an integrated circuit, and/or an application specific integrated circuit (ASIC), for example.

The controller 460 may control the temperature controller 11 based on the temperature sensed by the temperature sensor 16 to adjust the temperature of the fermentation tank 112 to the target temperature in the cooling operation (S120) and/or the fermentation operations (S160 and S170). As described above, the temperature controller 11 may include the refrigerant cycle device 13 to cool the fermentation tank 112 and the heater 14 to heat the fermentation tank 112.

The controller 460 may control the gas pressure sensor 72 to measure the inner pressure of the fermentation tank 112 in the fermentation operation (S160 and S170). In addition, the controller 460 may control the gas discharge valve 73 to adjust the inner pressure of the fermentation tank 112 and/or discharge gas including off-flavor generated during fermentation to the outside, in the fermentation operations (S160 and S170).

Various types of beverages may be made using the beverage maker. As various ingredients are used depending on the types of beverages that are made, it is necessary to properly set a beverage making environment for each recipe so as to realize a taste or an aroma for each beverage recipe.

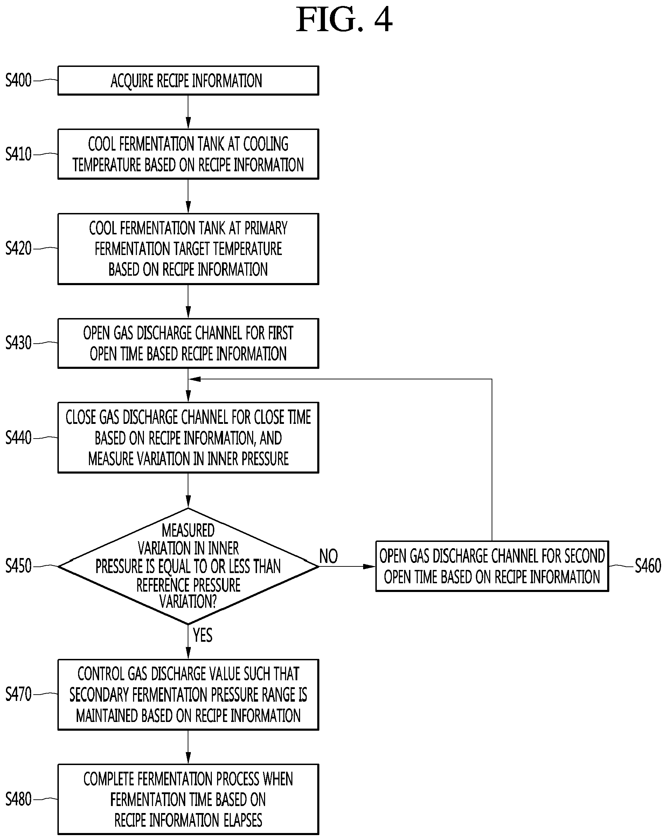

According to an exemplary embodiment of the present technique, the beverage maker may improve the taste or aroma of a finished beverage by determining the values for making the beverage based on the recipe information. Hereinafter, some exemplary embodiments of the present technique will be described with reference to FIGS 4 to 9.

FIG. 4 is a flowchart of a control operation of a beverage maker according to an exemplary embodiment of the present technique.

Referring to FIG. 4, the beverage maker may acquire recipe information of a beverage to be made (S400). The recipe information may include ingredient information of the beverage to be made. When the beverage to be made is beer, the recipe information may include information on a malt, a hop, a yeast, and a flavor additive.

For example, the controller 460 may acquire the recipe information through the input interface 420 or may acquire the recipe information from the terminal through the communication interface 410. Alternatively, the controller 460 may acquire the recipe information from a NFC tag provided in a beverage preparation pack or a beverage preparation kit using the NFC module included in the communication interface 410.

According to an exemplary embodiment of the present technique, the controller 460 may acquire the recipe information by recognizing a code (QR code) provided in the beverage preparation pack or the beverage preparation kit using the code recognizer 430. In this case, recipe information corresponding to a plurality of codes may be stored in the memory 450, and the controller 460 may acquire the recipe information by loading the recipe information from the memory 450.

The beverage maker may perform the fermentation tank cooling operation (S120) at a cooling temperature based on the recipe information (S410). The controller 460 may set the cooling temperature for the fermentation tank cooling operation (S120) based on the acquired recipe information.

The controller 460 may perform the cooling operation (S120) by driving the refrigerant cycle device 13. The controller 460 may perform the cooling operation (S120) until the temperature of the fermentation tank 112 or the fermentation container 12, for e.g. which is sensed by the temperature sensor 16, reaches the target cooling temperature.

As described with reference to FIG. 2, during the cooling operation (S120), the additive introducing operation (S130) and the ingredient supplier residual fluid removing operation (S140) may be performed. When the cooling operation S120 is completed, the controller 460 may stop the driving of the refrigerant cycle device 13 and may perform the air supplying operation (S150).

The beverage maker may commence the primary fermentation operation (S160) by cooling the fermentation tank 112 to a primary fermentation target temperature based on the recipe information (S420). After performing the air supplying operation (S150) described with reference to FIG. 2, the beverage maker may cool the temperature of the fermentation tank 112 or the fermentation container 12 to the primary fermentation target temperature by driving the refrigerant cycle device 13 to commence the primary fermentation operation (S160). The primary fermentation target temperature may be changed depending on the recipe information. For example, in the case of beer, a primary fermentation target temperature for an ale-based beer made by top fermentation may be higher than a primary fermentation target temperature for a lager-based beer made by bottom fermentation.

The beverage maker may open the gas discharge channel 71 for a first open time, i.e. first open time duration, based on the recipe information during the primary fermentation operation (S160) (S430). When the primary fermentation operation (S160) is commenced, yeast introduced into the fermentation tank 112 or the fermentation container 12 may perform a fermentation action. In the primary fermentation operation, off-flavor may be generated as the fermentation action is performed. In other words, after a predetermined time has elapsed after addition of the yeast to the ingredients in the fermentation container 12, the gas discharge valve 73 is opened by the controller 460, and is maintained in the opened state for a predetermined time duration, i.e. the first open time. The predetermined time and the predetermined time duration may be during the primary fermentation operation and may be preset or decided by the controller 460 for example according to a recipe information. The recipe information may be a recipe for a beverage that is being brewed or made in the beverage maker. The controller 460 may access the recipe information and may determine or calculate the predetermined time and the predetermined time duration, without requiring user input. The predetermined time may be zero or more, i.e. the gas discharge valve 73 may be opened by the controller 460 simultaneously with, or immediately after, addition of the yeast to the ingredients in the fermentation container 12.

The controller 460 may open the gas discharge channel 71 by opening the gas discharge valve 73 for the first open time based on the recipe information. The first open time may be set or calculated by the controller based on a fermentation speed based on characteristics of malt or yeast, and/or the primary fermentation target temperature contained in the recipe information. For example, as the fermentation speed is increased due to characteristics of the yeast contained in the recipe information, the first open time may be set to be shorter. In other words, when the fermentation speed is higher, duration of the first open time may be shorter, and vice versa.

As the gas discharge channel 71 is open, the gas including the off-flavor is discharged to the outside to effectively prevent the off-flavor from being generated in or contaminating the beer made thereafter. In addition, as the gas discharge channel 71 is open, the inner pressure of the fermentation tank 112 or the fermentation container 12 may be prevented from being increased.

As the gas discharge channel 71 is open in an initial section of the primary fermentation operation (S160), discharge of the off-flavor and the increase in the inner pressure may be prevented to minimize the increase of stress on the yeast. Accordingly, a desired or target fermentation action of the yeast may be induced in the primary fermentation operation (S160).

The beverage maker may close the gas discharge channel 71 for a close time, e.g. based on the recipe information after the first open time has elapsed, and may measure the variation of the inner pressure of the fermentation tank 112 using the gas pressure sensor 72 (S440). The controller 460 may close the gas discharge channel 71 by controlling the gas discharge valve 73 after the first open time has elapsed. In other words, after the first open time has elapsed, the gas discharge valve 73 is closed by the controller 460, and is maintained in the closed state e.g. is maintained in the closed state for a predetermined time duration i.e. the close time. The predetermined time duration, i.e. the close time, may be during the primary fermentation operation and may be calculated or set by the controller 460 according to the recipe information. The controller 460 may access the recipe information and may determine or calculate the close time, without requiring user input.

The controller 460 may measure the inner pressure of the fermentation tank 112 or the fermentation container 12 using the gas pressure sensor 72, while maintaining the close state of the gas discharge channel 71 for the close time based on the recipe information. The close time may be set or calculated by the controller based on the fermentation speed based on the characteristics of the malt or yeast, and/or the primary fermentation target temperature contained in the recipe information, similarly to the first open time. For example, as the fermentation speed is increased due to characteristics of the yeast contained in the recipe information, the close time may be set to be shorter. In other words, when the fermentation speed is higher, duration of the close time may be shorter, and vice versa.

For example, the controller 460 may measure a first pressure at a first time point using the gas pressure sensor 72 after, e.g. immediately after, closing the gas discharge channel 71 and may measure a second pressure using the gas pressure sensor 72 at a second time point, for example, at a time point at which the close time elapses, after the first time point. In this case, the second pressure may be higher than the first pressure. The controller 460 may measure the variation in pressure through the difference between the first pressure and the second pressure. When the measured variation in pressure is higher than a reference pressure variation ("No" in S450), the beverage maker may open the gas discharge channel 71 for the second open time based on the recipe information (S460). The first and the second time points may coincide with the start and end points of the close time.

The measured variation in pressure may indicate that the primary fermentation has not been sufficiently performed, when the measured variation in pressure exceeds the reference pressure variation, that is, a primary fermentation reference pressure variation. In this case, the gas including the off-flavor may be still generated due to the fermentation action of the yeast. Accordingly, the controller 460 may control the gas discharge valve 73 such that the gas discharge channel 71 is open for the second open time based on the recipe information. Accordingly, the primary fermentation may be continuously performed.

When the measured variation in the pressure is equal to or less than the primary fermentation reference pressure variation ("YES" in S450), the beverage maker may complete the primary fermentation operation (S160) and may commence the secondary fermentation operation (S170). The parameters such as temperature, pressure etc. applicable for the primary fermentation operation are stopped/ceased and the parameters such as temperature, pressure etc. applicable for the secondary fermentation operation are implemented. In other words, parameters applicable for the primary fermentation operation are changed to the parameters applicable for the secondary fermentation operation.

As the time of the primary fermentation elapses, a fermentation degree of the mixture is increased. Accordingly, an amount of gas including the off-flavor may be gradually reduced. Accordingly, the measured variation in the pressure may be reduced. The controller 460 may complete the primary fermentation operation (S160) and may commence the secondary fermentation operation (S170) when the measured variation in the pressure is equal to or less than the primary fermentation reference pressure variation.

As the secondary fermentation operation (S170) is commenced, the beverage maker may control the gas discharge valve 73 such that the inner pressure of the fermentation tank 112 is maintained to be within the secondary fermentation pressure range based on the recipe information (S470).

The controller 460 may close the gas discharge channel 71 as the secondary fermentation operation (S170) is commenced and may periodically measure the inner pressure of the fermentation tank 112 or the fermentation container 12 using the gas pressure sensor 72.

The upper and lower limits of the secondary fermentation pressure range may be set to various values depending on the types of beer (or a series of beer) made based on the recipe information. For example, as carbonic acid of beer is increased, the upper and lower limit values of the secondary fermentation pressure range may be set to be a higher value.

For example, when the measured pressure exceeds the upper limit of the secondary fermentation pressure range, the controller 460 may control the gas discharge valve 73 such that the gas discharge channel 71 is open for a predetermined period of time. Accordingly, as carbon dioxide in the fermentation tank 112 or the fermentation container 12 is discharged to the outside through the gas discharge channel 71, the pressure may be gradually reduced.

The controller 460 may control the gas discharge valve 73 to close the gas discharge channel 71 after the time has elapsed, thereby preventing the inner pressure of the fermentation tank 112 or the fermentation container 12 from being lowered to the lower limit of the secondary fermentation pressure range. In other words, in the second fermentation operation (S170), the inner pressure of the fermentation tank 112 or the fermentation container 12 is maintained to be within a specific range, and thus, carbonic acid having a predetermined concentration is dissolved in the beverage being made.

The beverage maker may complete the secondary fermentation operation (S170) when the secondary fermentation time based on the recipe information has elapsed (S480). According to an exemplary embodiment of the present technique, the beverage maker may complete the secondary fermentation operation (S170) when the total fermentation time (primary fermentation + secondary fermentation) based on the recipe information has elapsed.

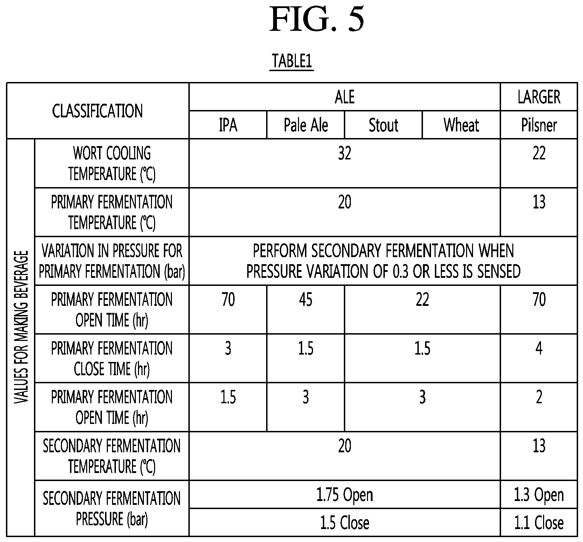

FIG. 5 is a table illustrating control values set to mutually different values depending on recipe information of beer when a type of a beverage to be made by the beverage maker is beer.

Referring to TABLE1 of FIG. 5, the beer may be classified into ale-based beer and lager-based beer. For example, the ale-based beer may include IPA, pale ale, stout, wheat, and the lager-based beer may include pilsner.

The table TABLE1 may include data for values for making the beverage corresponding to each of the types of beer. As described above, the values for making the beverage include cooling temperature (wort cooling temperature), primary fermentation target temperature (primary fermentation temperature), primary fermentation reference pressure variation (primary fermentation pressure variation), first open time (the first primary fermentation open time), close time (first fermentation close time), second open time (second primary fermentation open time), secondary fermentation target temperature (the second fermentation temperature), and secondary fermentation pressure range (the secondary fermentation pressure).

For example, the cooling temperature, the fermentation target temperature (the primary fermentation target temperature and the secondary fermentation target temperature) and the secondary fermentation pressure range may be varied depending on the series of beer. The first open time, the close time, and the second open time may be varied based on the Malt or yeast type of the recipe information.

The data about the values for making the beer included in the table TABLE1 may be stored in the memory 450. The beverage maker may determine the values for making the beer based on the table TABLE1, when the recipe information of the beer to be made is acquired based on the table TABLE1. The beverage maker may recognize the type of the beer to be made based on the recipe information and may load the values for making the beer corresponding to the recognized type of the beer from the memory 450. The beverage maker may make the beer having characteristics, taste or flavor, for example, intended based on the recipe information by making the beer based on the loaded values for making the beer.

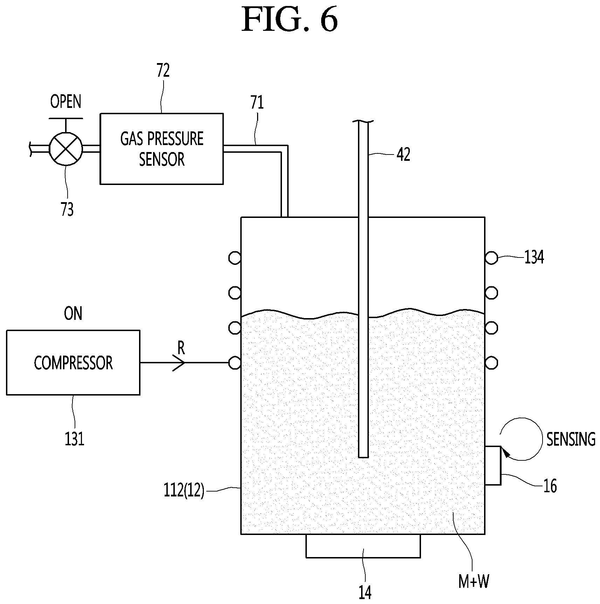

FIGs. 6 to 9 are views illustrating a beverage making operation performed based on control values set according to recipe information.

FIG. 6 represents the cooling operation (S120) and (S410) of FIG. 4. Referring to FIG. 6, the controller 460 may drive (turn on) the compressor 131 of the refrigerant cycle device 13. In addition, the controller 460 may open the gas discharge channel 71 by opening the gas discharge valve 73.

As the compressor 131 is driven, refrigerant R may be provided from the compressor 131 to the evaporator 134. The temperature of the fermentation tank 112 and the fermentation container 12 in the region where the evaporator 134 is wound may be lowered due to the refrigerant R provided to the evaporator 134. In this case, the temperature of the mixture of malt and water M+W contained therein may be lowered due to heat conduction and convection.

The controller 460 may sense the temperature of the fermentation tank 112 using the temperature sensor 16, and may terminate the cooling operation (S410) when the sensed temperature reaches a cooling temperature set based on the recipe information. For example, when the type of beer according to the recipe information is "IPA", the controller 460 terminates the operation (S410) when the sensed temperature is 32 °C or less than 32 °C based on the table TABLE1 of FIG. 5.

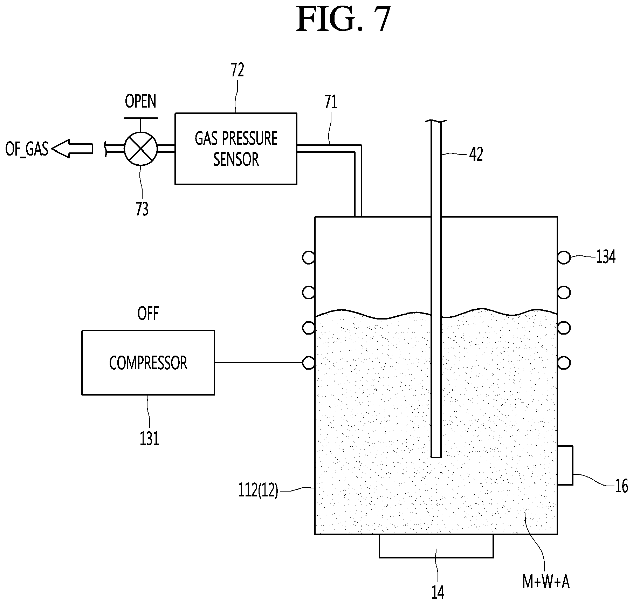

FIG. 7 illustrates the gas discharge operation (S430) of FIG. 4.

The controller 460 may open the gas discharge channel 71 by opening the gas discharge valve 73. As the gas discharge channel 71 is open, gas OF_GAS including the off-flavor generated from the mixture of malt, water, and an additive M+W+A received in the fermentation tank 112 or the fermentation container 12 may be discharged to the outside through the gas discharge channel 71. For example, the additive A may include hop, yeast, and fragrance additives. The gas OF GAS may correspond to a gas generated during yeast fermentation.

The controller 460 may open the gas discharge channel 71 during the first open time based on the recipe information. For example, when the type of beer according to the recipe information is 'IPA', the controller 460 may keep open the gas discharge channel 71 for 70 hours based on the table TABLE1 of FIG. 5.

The controller 460 may turn off the compressor 131. However, the temperatures of the fermentation tank 112 and the mixture M+W+A may be varied depending on an external environment during the gas discharge operation (S430). The controller 460 may periodically measure the temperature using the temperature sensor 16, and may drive the compressor 131 or the heater 14 when the measured temperature has a difference from the primary fermentation target temperature by a specific value or more. For example, when the measured temperature is lower than the primary fermentation target temperature (e.g., 20°C) by a predetermined value (e.g., 2°C) or more, the controller 460 may drive the heater 14 to heat the fermentation tank 112 and the mixture M+W+A. When the measured temperature is higher than the primary fermentation target temperature by a specific value, the controller 460 may drive the compressor 131 to cool the fermentation tank 112 and the mixture M+W+A.

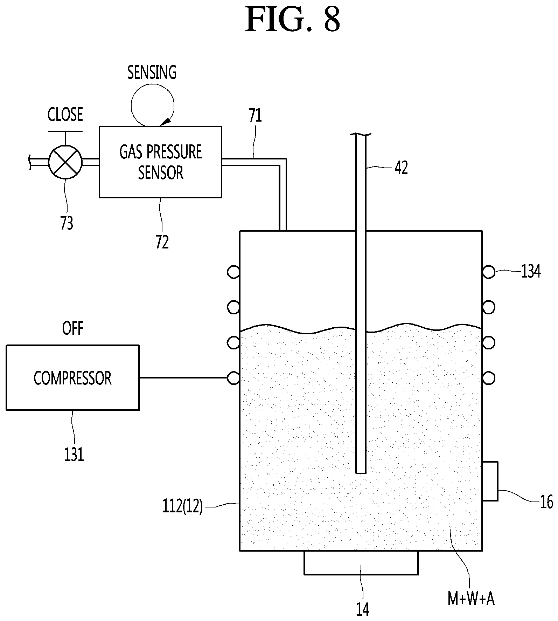

Referring to FIG. 8, the controller 460 may close the gas discharge channel 71 by closing the gas discharge valve 73 after the first open time has elapsed (S440 of FIG. 4). As the gas discharge channel 71 is closed, the gas generated from the mixture M+W+A is not discharged to the outside of the fermentation tank 112 or the fermentation container 12. Accordingly, the inner pressure of the fermentation tank 112 or the fermentation container 12 may gradually increase.

The controller 460 may sense the pressure using the pressure sensor 72 while the gas discharge channel 71 is closed for the close time based on the recipe information. For example, when the type of beer according to the recipe information is 'IPA', the controller 460 may close the gas discharge channel 71 for 3 hours based on the table TABLE1 of FIG. 5.

For example, the controller 460 may sense the first pressure right after the gas discharge channel 71 is closed and may sense the second pressure at the time point at which the close time elapses, albeit while the gas discharge channel 71 is still closed. When the difference between the first pressure and the second pressure exceeds the primary fermentation reference pressure variation, the controller 460 may determine that the primary fermentation is not completed. The controller 460 may continuously perform the primary fermentation by opening the gas discharge channel 71 for the second open time based on the recipe information. The relevant operation is illustrated in FIG. 7. The second open time durations are for example illustrated in TABLE1 in the row immediately beneath the row indicating the primary fermentation close time.

After the second open time has elapsed, the controller 460 may close the gas discharge channel (S440 of FIG. 4) again. In other words, the controller 460 may repeatedly perform the operations (S440 and S460) until the difference between the first pressure and the second pressure to be the primary fermentation reference pressure variation or less. According to an exemplary embodiment of the present technique, the controller 460 may repeatedly perform the operations (S440 and S460) until the controller 460 consecutively senses, specific times, that the difference between the first pressure and the second pressure is the primary fermentation reference pressure variation or less.

The controller 460 may complete the primary fermentation when the difference between the first pressure and the second pressure is the primary fermentation reference pressure variation set based on the recipe information. For example, when the type of the beer based on the recipe information is "IPA", the controller 460 may complete the primary fermentation, when the difference of 0.3 or less is consecutively sensed three times between the first pressure and the second pressure based on the table TABLE1.

The controller 460 in FIG. 8 may turn off the compressor 131. However, the temperatures of the fermentation tank 112 and the mixture M+W+A may be varied depending on the external environment during the operation (S440). The controller 460 may periodically measure the temperature using the temperature sensor 16, and may drive the compressor 131 or the heater 14 when the measured temperature has a difference from the primary fermentation target temperature by a specific value or more.

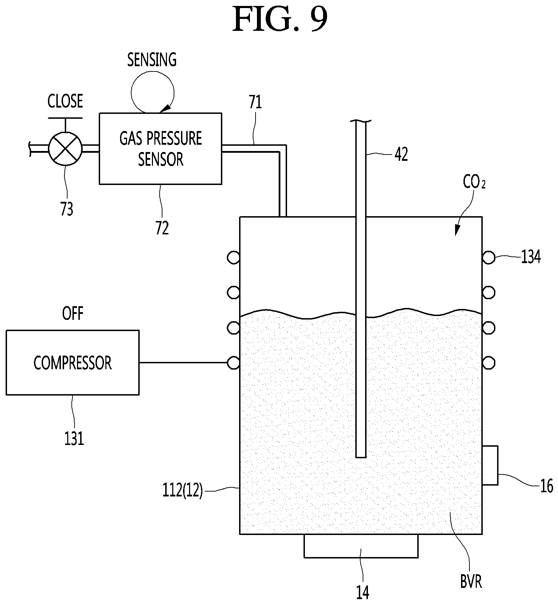

Referring to FIG. 9, the controller 460 may close the gas discharge channel 71 by closing the gas discharge valve 73 as the secondary fermentation operation (S170) is commenced (S470 of FIG. 4).

As the gas discharge channel 71 is closed and the secondary fermentation operation (S170) is performed, carbon dioxide may be generated from the mixture M+W+A and the inner pressure of the fermentation tank 112 or the fermentation container 12 may increase. As the carbon dioxide is not discharged to the outside, the carbon dioxide may be dissolved in the mixture M+W+A in a carbonated form.

The controller 460 may periodically sense the pressure using the gas pressure sensor 72. When the sensed pressure exceeds the upper limit of the secondary fermentation pressure range based on the recipe information, the controller 460 may open the gas discharge channel 71 for a specific time by opening the gas discharge valve 73. As the gas discharge channel 71 is opened, some of the carbon dioxide in the fermentation tank 112 or the fermentation container 12 may be discharged to the outside, and the inner pressure may be reduced.

The controller 460 may close the gas discharge channel 71 by closing the gas discharge valve 73 when a specific time has elapsed after the gas discharge channel 71 is opened. The inner pressure of the fermentation tank 112 or the fermentation container 12 may be made to be lower than the lower limit. According to an exemplary embodiment of the present technique, the controller 460 may sense a pressure during opening of the gas discharge channel 71 using the gas pressure sensor 72. The controller 460 may close the gas discharge channel 71 by closing the gas discharge valve 73 when the sensed pressure is less than the lower limit of the secondary fermentation pressure range.

For example, when the type of beer according to the recipe information is "IPA", the controller 460 may open the gas discharge channel 71 when the pressure sensed by the gas pressure sensor 72 exceeds 1.75 bar based on the table TABLE1 of FIG. 5, The controller 460 may prevent the inner pressure of the fermentation tank 112 or the fermentation container 12 to be reduced to be less than 1.5 bar by closing the gas discharge channel 71 after the specific time has elapsed.

The controller 460 may turn off the compressor 131 as in FIG. 9. However, the temperatures of the fermentation tank 112 and the mixture M+W+A may be varied depending on the external environment during the operation (S470). The controller 460 may periodically measure the temperature using the temperature sensor 16, and may drive the compressor 131 or the heater 14 when the measured temperature has a difference from the secondary fermentation target temperature by a specific value or more.

The controller 460 may complete the secondary fermentation operation when a progress time of the secondary fermentation operation passes the secondary fermentation time. Accordingly, beverage BVR may be finished.

Alternatively, the controller 460 may complete the secondary fermentation operation when a total progress time of the primary fermentation operation (S160) and the secondary fermentation operation (S170) passes the target fermentation time. The secondary fermentation target time (or fermentation time) may be set based on the recipe information.

In other words, according to an exemplary embodiment of the present technique, the beverage maker may make various types of beverages with optimal quality by performing beverage making operations using mutually different setting values for making the beverage based on recipe information. Accordingly, satisfaction of the user with the beverage maker may be maximized.

According to an exemplary embodiment of the present technique, the beverage maker may variously determine setting values, such as an open time and/or a close time of the gas discharge channel during the primary fermentation, for making a beverage, based on the recipe information and may control the operations of making the beverage using the setting values, thereby making various types of beverages with optimal quality. Accordingly, satisfaction of the user with the beverage maker may be maximized.

In particular, the beverage maker may change, based on the recipe information, various setting values, such as a cooling temperature, a primary fermentation target temperature, a primary fermentation reference pressure variation, the open time, the close time, and the secondary fermentation pressure range. Accordingly, more various types of beverages may be made using the beverage maker.

Exemplary embodiments of the present technique disclosed herein provide a beverage maker capable of making a beverage under optimal control based on recipe information. Exemplary embodiments disclosed of the present technique herein also provide a beverage maker capable of making various types of beverages by properly realizing a taste or an aroma intended based on each recipe using various control setting values.

According to an exemplary embodiment of the present technique, the beverage maker may open the gas discharge channel for a first open time which is set based on the recipe information of the beverage to be made, and close the gas discharge channel for a close time which is set based on the recipe information. The beverage maker may sense variation in the inner pressure of the fermentation tank using the gas pressure sensor while the gas discharge channel is closed and determine whether the primary fermentation operation is completed, based on the sensed variation. The beverage maker may open the gas discharge channel for a second open time without completing the primary fermentation operation when the sensed variation is greater than a primary fermentation reference pressure variation set based on the recipe information.

The beverage maker may complete the primary fermentation operation and perform the secondary fermentation operation, when the sensed variation is equal to or less than primary fermentation reference pressure variation. The beverage maker may control the opening and the closing of the gas discharge channel based in the secondary fermentation pressure range set based on the recipe information, during the secondary fermentation operation. The secondary fermentation operation may be performed for a secondary fermentation setting time set based on the recipe information.

Further, the beverage maker may perform a fermentation tank cooling operation before the primary fermentation operation. In the fermentation tank cooling operation, the beverage maker may cool the fermentation tank by driving the compressor, sense a temperature of the fermentation tank through a temperature sensor, and complete the fermentation tank cooling operation when the sensed temperature reaches a cooling temperature set based on the recipe information. The beverage maker may control a refrigerant cycle device and/or a heater such that the temperature of the fermentation tank is maintained in a specific range from a target fermentation temperature set based on the recipe information. The recipe information may be acquired by at least one of an input interface, a communication interface, an NFC module, or a code recognizer.

Details of one or more implementations are set forth in the accompanying drawings and the description. Other features will be apparent from the description and drawings, and from the claims.

The disclosed subject matter is to be considered illustrative, and not restrictive, and the appended claims are intended to cover all such modifications, enhancements, and other implementations, which fall within the scope. Thus, implementation of the exemplary embodiments is to be considered illustrative, and not restrictive. Therefore, the scope is defined not by the detailed description but by the appended claims, and all differences within the scope will be construed as being included.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative to the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein may be for the purpose of describing particular exemplary embodiments only and may not be intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Exemplary embodiments of the disclosure are described herein with reference to cross-section illustrations that are schematic illustrations of idealized exemplary embodiments (and intermediate structures) of the disclosure. As such, variations from the shapes of the illustrations as a result, for example, of manufacturing techniques and/or tolerances, are to be expected. Thus, exemplary embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A beverage maker, comprising:
a fermentation tank (112) having a space to make a beverage;
a gas discharge channel (71) that communicates with an inner portion of the fermentation tank (112);
a gas discharge valve (73) disposed on the gas discharge channel (71);
a gas pressure sensor (72) disposed in the gas discharge channel (71) to sense an inner pressure of the fermentation tank (112); and
a controller (460) configured to perform a primary fermentation operation and a secondary fermentation operation based on recipe information of the beverage to be made, wherein in the primary fermentation operation the controller (460) is configured to:
control the gas discharge valve (73) to open the gas discharge channel (71) for a first open time based on the recipe information;
control the gas discharge valve (73) to close the gas discharge channel (71) for a close time based on the recipe information, after the first open time has elapsed;
sense a variation, for the close time, in the inner pressure of the fermentation tank (112) using the gas pressure sensor (72) while the gas discharge channel (71) is closed by the gas discharge valve (73); and
determine whether the primary fermentation operation is completed, based on the sensed variation.

2. The beverage maker of claim 1, wherein the controller (460) is configured to:
end the primary fermentation operation, when the sensed variation is equal to or less than the primary fermentation reference pressure variation.

3. The beverage maker of claim 1 or 2, wherein the controller (460) is configured to:
control the gas discharge valve (73) to open the gas discharge channel (71) for a second open time based on the recipe information, when the sensed variation is greater than a primary fermentation reference pressure variation based on the recipe information.

4. The beverage maker of claim 3, wherein the controller (460) is configured to:
control the gas discharge valve (73) to close the gas discharge channel (71) for the close time based on the recipe information, after the second open time has elapsed;
sense again a variation, for the close time, in the inner pressure of the fermentation tank (112) using the gas pressure sensor (72) while the gas discharge channel (71) is closed by the gas discharge valve (73); and
determine whether the primary fermentation operation is completed, based on the variation sensed again.

5. The beverage maker of claim 4, wherein the controller (460) is configured to:
end the primary fermentation operation, when the variation sensed again is equal to or less than the primary fermentation reference pressure variation.

6. The beverage maker of any one of claims 1 to 5, wherein the controller (460) is configured to:
in the secondary fermentation operation, control the gas discharge valve (73) to be open or closed or to alternate between open and closed based on a secondary fermentation pressure range based on the recipe information such that the gas discharge channel (71) is opened or closed.

7. The beverage maker of claim 6, wherein the controller (460) is configured to:
in the secondary fermentation operation, control the gas discharge valve (73) to open the gas discharge channel (71), when the pressure sensed by the gas pressure sensor (72) exceeds an upper limit of the secondary fermentation pressure range.

8. The beverage maker of claims 7, wherein the controller (460) is configured to:
in the secondary fermentation operation, control the gas discharge valve (73) to close the gas discharge channel (71) when a specific time has elapsed after the gas discharge channel (71) is opened.

9. The beverage maker of any one of claims 1 to 8, wherein the controller (460) is configured to:
end the secondary fermentation operation when a time in which the secondary fermentation operation is performed reaches a predetermined secondary fermentation time based on the recipe information.

10. The beverage maker of any one claims 1 to 9, further comprising:
an evaporator (134) provided around a portion of an outer surface of the fermentation tank (112); and
a compressor (131) to supply a refrigerant to the evaporator (134); and
wherein the controller (460) is configured to:
control a fermentation tank cooling operation performed before the primary fermentation operation;
cool the fermentation tank (112) by driving the compressor (131) in the fermentation tank cooling operation;
sense a temperature of the fermentation tank (112) through a temperature sensor (16) provided at the fermentation tank (112); and
end the fermentation tank cooling operation when the sensed temperature reaches a cooling temperature based on the recipe information.

11. The beverage maker of claim 10, further comprising:
a heater (14) provided at the fermentation tank (112), and
wherein the controller (460) is configured to:
sense the temperature of the fermentation tank (112) during the primary fermentation operation and/or the secondary fermentation operation;
drive the compressor (131) when the sensed temperature is higher or higher by a first specific value than a target fermentation temperature based on the recipe information; and
drive the heater (14) when the sensed temperature is lower or lower by a second specific value than the target fermentation temperature.

12. The beverage maker of any one of claims 1 to 11, wherein the controller (460) is configured to set the first open time and/or the close time based on a fermentation speed of the beverage being made, based on the recipe information.

13. The beverage maker of any one of claims 1 to 12, further comprising:
a memory (450) configured to store first open times and/or close times corresponding to each of a plurality of recipes.

14. The beverage maker of any one of claims 1 to 13, further comprising at least one of:
an input interface (420) configured to receive an input of the recipe information;
a communication interface (410) configured to receive the recipe information from a terminal;
a near field communication (NFC) module configured to receive the recipe information from an NFC tag provided in a beverage preparation pack or a beverage preparation kit; and
a code recognizer (430) configured to recognize a code provided in the beverage preparation pack or the beverage preparation kit.

15. The beverage maker of any of claims 1 to 14, further comprising:
a display (440) configured to display the recipe information.
